# EUROPÄISCHE PATENTSCHRIFT

(11) **EP 3 022 039 B1**
(45) Veröffentlichungstag und Bekanntmachung des Hinweises auf die Patenterteilung: **04.09.2019**
(21) Anmeldenummer: 14747828.3
(22) Anmeldetag: 11.07.2014
(51) Int. Cl.: B29C 49/58, B29C 49/42, B29C 49/06

(54) **VORRICHTUNG ZUR BLASFORMUNG VON BEHÄLTERN**
DEVICE FOR BLOW MOLDING CONTAINERS
DISPOSITIF PERMETTANT LE MOULAGE PAR SOUFFLAGE DE CONTENANTS

(30) Priorität: 19.07.2013 DE 102013012209
(43) Veröffentlichungstag der Anmeldung: 25.05.2016
(73) Patentinhaber: KHS Corpoplast GmbH, 22145 Hamburg (DE)
(72) Erfinder: LITZENBERG, Michael, 21502 Geesthacht (DE); BAUMGARTE, Rolf, 22926 Ahrensburg (DE); KIEFER, Margit, 22119 Hamburg (DE); LEWIN, Frank, 22889 Tangstedt (DE); LINKE, Michael, 22159 Hamburg (DE)
(74) Vertreter: Hausfeld, Norbert
(86) Internationale Anmeldenummer: PCT/EP2014/001907
(87) Internationale Veröffentlichungsnummer: WO 2015/007378

(56) Entgegenhaltungen:
- EP-A1- 2 127 851
- DE-A1-102007 009 026
- DE-A1-102008 025 775
- US-A1- 2010 151 073

## Beschreibung

Die Erfindung betrifft eine Vorrichtung zur Blasformung von Behältern, die mindestens eine Blasstation zur Umformung der Vorformlinge in die Behälter beinhaltet.

Insbesondere ist die erfindungsgemäße Vorrichtung anwendbar innerhalb eines Verfahrens zur Blasformung von Behältern, bei dem Vorformlinge aus einem thermoplastischen Material im Bereich einer Heizstrecke erwärmt und anschließend an eine Blaseinrichtung übergeben werden, in der die Vorformlinge durch Einwirkung eines Blasdruckes innerhalb von Blasformen zu den Behältern umgeformt werden. Eine bevorzugte Anwendung erfolgt für Blasmaschinen mit einem rotierenden Blasrad.
Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die erwähnte Einleitung des unter Druck stehenden Gases umfasst auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert. Eine gattungsgemäße Vorrichtung zur Blasformung von Behältern sowie das zur Herstellung dieser Behälter erforderliche Verfahren offenbart die DE 10 2007 009 026 A1.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgussverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgusstechnischen Herstellung und einer ausreichenden Verfestigung geeignet temperiert und anschließend aufgeblasen werden.

Das bedeutet, dass die Vorformlinge entweder aus der ersten Hitze heraus blasgeformt oder separat temperaturkonditioniert und anschließend blasgeformt werden können. Diese Zusammenhänge werden in der DE 10 2007 009 026 A1 beschrieben.

Im Hinblick auf die verwendeten Blasstationen sind unterschiedliche Ausführungsformen bekannt. Bei Blasstationen, die auf rotierenden Transporträdern angeordnet sind (Rundläuferprinzip), ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Bei der blastechnischen Verformung der Vorformlinge und somit bei der Umformung in die Behälter wird der Innenraum der Vorformlinge mit einem erheblichen Innendruck beaufschlagt, um den Blasvorgang durchzuführen. Bei dieser Blasformung wirken Innendrücke von bis zu 40 bar. Hierbei ist es unerwünscht, dass sich auch ein Gewindebereich des Vorformlings verformt, da ansonsten die Passgenauigkeit von beim Verschließen der Behälter verwendeten Kappen beeinträchtigt würde.

Zur Vermeidung derartiger unerwünschter Vorformungen ist es bereits bekannt, den Gewindebereich außenseitig mechanisch abzustützen. Darüber hinaus ist eine außenseitige Abdichtung des Vorformlings derart bekannt, dass auf beiden Seiten des Gewindebereiches ein im Wesentlichen gleicher Druck herrscht. Der Gewindebereich des Vorformlings wird hierzu typischerweise mit einem Ausgleichsraum umgeben, der gegenüber einem Stützring des Vorformlings abgedichtet wird. Dadurch wird erreicht, dass der Blasdruck allseitig an dem Gewindebereich anliegt und dadurch ein die Verformung begünstigendes Druckgefälle zwischen Innen- und Außenflächen des Gewindebereiches vermieden wird.

Bei einer Abdichtung gegen den Stützring müssen zum einen Beschädigungen des Stützringes des Vorformlings vermieden werden, darüber hinaus muss eine sichere Abdichtung auch bei einem Auftreten von Fertigungstoleranzen sowie unter Berücksichtigung von Alterungserscheinungen der verwendeten Bauelemente und von temperaturbedingten Materialausdehnungen gewährleistet sein. Die DE 10 2007 009 026 A1 bietet hinsichtlich dieses Anforderungskataloges eine Vorrichtung an.

Realisiert ist danach ein Dichtelement im Bereich der Blaseinrichtung, dass gegen einen Stützring des Vorformlings geführt wird und gemäß der das Dichtelement nach einem Kontakt mit dem Stützring zunächst mechanisch gegenüber dem Stützring vorgespannt und anschließend pneumatisch weitergespannt wird.

Das Dichtelement zur Abdichtung des Vorformlings erstreckt sich im Bereich eines einen Mündungsabschnitt des Vorformlings umgebenden Ausgleichsraumes ausgehend von einem Anschlag eines Anschlusselementes in Richtung auf eine Einführöffnung des Anschlusselementes und weist mindestens einen Wölbungsbereich auf, der sich in eine einer Stützfläche des Anschlusselementes entgegengesetzte Richtung erstreckt.

Durch die unter Verwendung des Dichtelementes erfolgende Abdichtung einer Umgebung des Mündungsabschnittes des Vorformlings ist es möglich, außerhalb des Mündungsabschnittes einen Druck aufzubauen, der einer Verformung des Mündungsabschnittes bei der blastechnischen Verformung entgegenwirkt. Dies wird realisiert durch den am Mündungsabschnitt des Vorformlings allseitig anliegenden, gleichen Druck.

Die mechanische Vorspannung des Dichtelementes stellt eine ausreichende Dichtigkeit bereit, um in einem zweiten Verfahrensschritt eine pneumatische Weiterspannung der Dichtung zu ermöglichen. Das pneumatische Verspannen ermöglicht es insbesondere, mit zunehmendem abzudichtendem Druck auch die abdichtende Verspannung des Dichtelementes zu erhöhen.

Nachteilig bei dieser bekannten Vorrichtung ist, dass zur Realisierung der Dichtungsanordnung innerhalb der Blaseinrichtung die Blasdüse mit einem großen Durchmesser ausgeführt sein muss. Infolge der Beanspruchung des daraus resultierenden erheblichen Bauraumes bei gleichzeitiger Anordnung mehrerer Blasstationen an der Blaseinrichtung mit vorgegebenem Abstand ist es häufig nicht möglich, Greifzangenkonstruktionen zum Greifen der Vorformlinge oder der geblasenen Behälter in jeder Stellung der Blasstationen in dem Bereich der Vorformlinge oder Behälter einzufahren.

Weiter ist bei dieser bekannten Vorrichtung nachteilig, dass aufgrund der pneumatischen Verspannung und infolge der Erstreckung in entgegengesetzter Richtung des Anschlusselementes eine Relativbewegung des Dichtelementes gegenüber der das Dichtelement abstützenden konzentrischen Zylinderfläche in dem Mündungsabschnitt vorhanden ist.

Insbesondere durch die Tatsache, dass die Haft- und Gleitreibung der vorliegenden Werkstoffpaarung des Dichtelementes und der Zylinderfläche erheblich hohe Werte aufweist, besteht die Gefahr, dass die verbleibende axiale Kraft auf die konzentrische Dichtungsringfläche nicht ausreicht, um die für die zuverlässige Abdichtung erforderliche Flächenpressung am Dichtungssitz zu erzeugen.

Aufgabe der vorliegenden Erfindung ist es, eine Vorrichtung der einleitend genannten Art derart zu verbessern, dass bei einfachem konstruktiven Aufwand und hoher Betriebszuverlässigkeit die Bauraumbeanspruchung der Blasdüse reduziert und die zuverlässige Abdichtung zwischen Vorrichtung und Vorformling bzw. Behälter unterstützt wird.

Diese Aufgabe wird erfindungsgemäß dadurch gelöst, dass sich ein Dichtelement zur Abdichtung des Vorformlings im Bereich eines einen Mündungsabschnitt des Vorformlings umgebenden Ausgleichsraumes ausgehend von einem Anschlag eines Anschlusselementes in Richtung auf eine Einführöffnung des Anschlusselementes erstreckt, dass das Dichtelement mindestens einen Wölbungsbereich aufweist, der sich in eine einer Stützfläche des Anschlusselementes entgegengesetzte Richtung erstreckt und dass das Dichtelement von einer innerhalb der Blasdüse beweglichen Stützhülse umfasst ist. Durch die Verwendung einer Blasdüsendichtung bestehend aus einem Dichtelement mit einer umgebenden Stützhülse, welche gemeinsam mechanisch vorgespannt und anschließend pneumatisch weiter gespannt werden, ist es möglich, sowohl eine schonende als auch äußerst zuverlässige Abdichtung des Vorformlings vorzunehmen.

Dabei ist insbesondere die Stützhülse starr ausgebildet, um das Dichtelement wirksam stützen zu können. Somit sind aufgrund der Erfindung neben starren auch flexible Dichtelemente verwendbar, die alleine nicht oder nicht ausreichend formstabil für die gewünschte Dichtfunktion des gewählten Einzelfalls wären.

Durch die das Dichtelement umgebende Stützhülse ist es möglich, dass die Aufnahmemittel für die Vorformlings- bzw. Behältermündung und die Blasdüsendichtung aus der Blasdüse axial herausragbar konstruiert werden können mit dem Ergebnis, dass ein verringerter Bauraum realisiert und die Greifzangen in jeder beliebigen Stellung der Blasdüsen zwischen die Blasdüsen benachbarter Blasstationen einfahrbar sind.

Eine definierte Verformung des Dichtelementes bei der Durchführung des Vorspannens wird dadurch erreicht, dass das Dichtelement während des Vorspannens im Bereich einer Wölbung mit einer zunehmenden Verformung der Wölbung versehen wird. Die Dichtlippe des Dichtelementes liegt dabei stirnseitig am Blasdüseneinsatz an bzw. stützt sich daran ab.

Eine einfache Durchführung des Weiterspannens wird dadurch erreicht, dass das Weiterspannen durch einen Druck des Blasgases auf die Wölbung durchgeführt wird, aufgrund dessen sich die Wölbung aufweitet. Die erfindungsgemäße Stützhülse verhindert dabei wirksam unerwünschte Verformungen oder Ausweichbewegungen des Dichtelements, so dass über die Wölbung in das Dichtelement eingeleitete Druckkräfte optimal das Weiterspannen der Blasdüsendichtung bewirken.

Vorzugsweise ist die Stützhülse axial verschiebbar innerhalb des Blasdüsenkopfes angeordnet. Beispielsweise ist die Wölbung des Dichtelements in axialer Richtung zwischen der Stützhülse und dem Blasdüsenkopf angeordnet, um das beschriebene mechanische und pneumatische Vorspannen bzw. Weiterspannen der Blasdüsendichtung zu erreichen.

Die erfindungsgemäße Kombination aus dem Dichtelement und der Stützhülse ist insbesondere dafür geeignet, in einer Längsrichtung der Anordnung auftretende Toleranzen zu überbrücken. Diese können beispielsweise aus der Dicke des Stützringes der Vorformlinge oder aus der geometrischen Anordnung der Blasdüse relativ zur Blasform resultieren. Ein maximales Ausfahren der Kombination aus der Dichthülse und der Stützhülse aus der Blasdüse heraus wird durch einen mechanischen Anschlag zwischen der Stützhülse und der umgebenden Wandung der Blasdüse vorgegeben.

Aufgrund des profilierten Verlaufes der Dichthülse, ähnlich zum Abschnitt eines Faltenbalges, ist ein Einfedern möglich. Diese Möglichkeit zu einem definierten Einfedern unterstützt die Fähigkeit zum Toleranzausgleich.

Insbesondere erweist es sich für eine Durchführung des Abdichtungsvorganges als vorteilhaft, dass durch den Druck innerhalb der Wölbung eine Querkraft in eine das Dichtelement verspannende Längskraft umgesetzt wird. Durch die erfindungsgemäße Lehre wird infolge der Verwendung einer Stützhülse als bewegliches Element innerhalb der Blasdüse die Möglichkeit geschaffen, durch entsprechende Werkstoffwahl die Haft- und Gleitreibungswerte zu reduzieren, die den Betrag der Längskraft negativ beeinflussen können. Infolge der Verwendung einer Stützhülse als das Dichtelement umschließendes Bauteil wird verhindert, dass das Dichtelement eine Relativbewegung zu einem Bauteil der Blasdüse ausführt. Vorteilhafte Werkstoffwahlen bestehen z.B. aus gleichartigen Werkstoffen wie Metall-Metall oder Kunststoff-Kunststoff.

Insbesondere empfiehlt sich die Verwendung von Kompositwerkstoffen oder eingelagerte Schmierstoffpartikel in eine Grundmatrix. Auch die Verwendung von unterschiedlichen Werkstoffen wie z.B. Kunststoff-Metall für das Dichtelement und Stützhülse ist denkbar. In der Regel ist das Dichtelement aus einem Elastomerwerkstoff gebildet.

Weiterer Vorteil der erfindungsgemäßen Lehre ist die Eigenschaft der Kombination aus Dichtelement und Stützhülse, um Längenmaßabweichungen der einzelnen Elemente der Blasdüse, der Stützhülse und des Schulterbereiches des Stützringes von Vorformling bzw. Behälter in Axialrichtung infolge Toleranzen praktisch selbsttätig auszugleichen. Die Formgebung des Dichtelementes und seiner endseitigen Wölbung unterstützt auch größere Ersteckungswege. Darüber hinaus ist durch die Formgebung der Wölbung eine Komprimierung der Wölbung möglich, welche den Ausgleich von Längentoleranzen unterstützt. Vorzugsweise ist die Stützhülse mit einem endseitigen Bund ausgestattet, dessen Schulter mit einem Vorsprung der Blasdüse derart zusammenwirkt, dass die axiale Erstreckung der Blasdüsendichtung begrenzt wird.

Ein Aufbau von Gegenkräften, d.h. ein sich an der Außenfläche der Dichtelementwölbung infolge der Verformung einstellender Druck, wird durch die Spielpassung zwischen Stützhülse und Blasdüse vermieden, welche den Hohlraum zwischen der Wölbung und dem Außenelement während einer Verformung der Wölbung insbesondere zum Umgebungsraum hin entlüftet.

Die Bereitstellung eines konzentrischen Aufnahmeraumes für die Vorformlings- bzw. Behältermündung innerhalb der Blasdüse wird durch Zentrier- und Führungselemente für die Blasdüsendichtung und den Blasdüseneinsatz erreicht. Durch den konzentrischen Aufnahmeraum wird die gleichmäßige Druckverteilung am Gewindebereich des Vorformlings unterstützt.

Eine Nutzung der Blasluft zur Verformung des Dichtelementes und zur Realisierung der gleichmäßigen Druckverteilung am Gewindebereich des Vorformlings wird dadurch erreicht, dass der Aufnahmeraum über mindestens einen Verbindungskanal mit einem Innenraum des Anschlusselementes verbunden ist.

In den Zeichnungen ist die erfindungsgemäße Vorrichtung schematisch dargestellt. Es zeigen:
- Fig. 1: eine perspektivische Darstellung einer Blasstation mit der Vorrichtung zur Blasformung von Behältern aus Vorformlingen, wobei der Vorformling an einem Ventilblock in der axialen Stellung zur Vorformlingaufnahme positioniert ist,
- Fig. 2: eine perspektivische Darstellung einer Blasstation mit der Vorrichtung zur Blasformung von Behältern aus Vorformlingen, wobei der Vorformling an einem Ventilblock in der axialen Stellung nach dem Blasvorgang positioniert ist und bei der eine illustrierte Darstellung des Vorformlings im Ausgangszustand vor dem Blasvorgang und den nach dem Blasvorgang erzeugten Behälters enthalten ist,
- Fig. 3: eine Skizze gemäß der Situation von Fig. 1 ohne Vorformling,
- Fig. 4: ein Axialschnitt A-A der erfindungsgemäßen Vorrichtung mit der illustrierten Mündung eines Vorformlings oder Behälters mit Gewinde und Stützring.

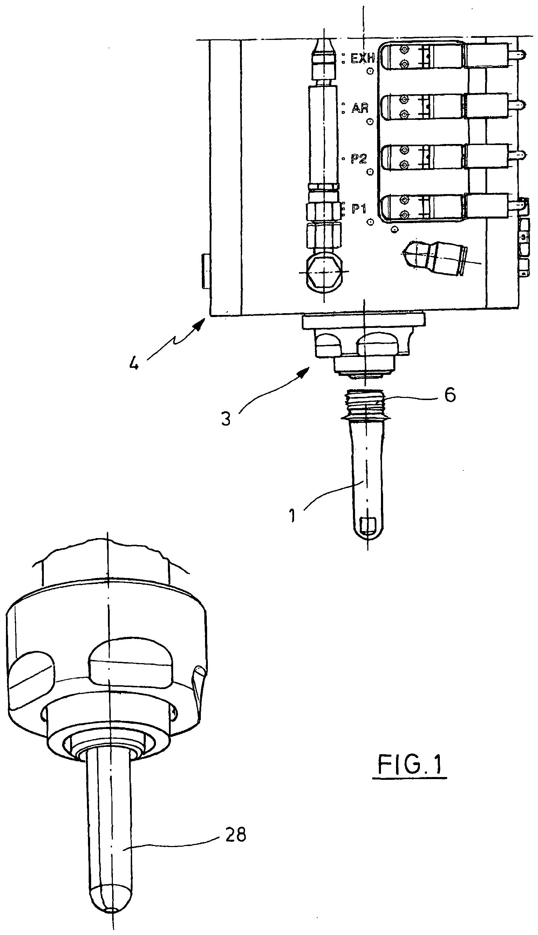

Fig. 1 zeigt die Vorrichtung (3) zur Blasformung von Behältern (2) festgelegt an einem Blasluftsteuerblock (4), der als Ventilblock ausgebildet ist.

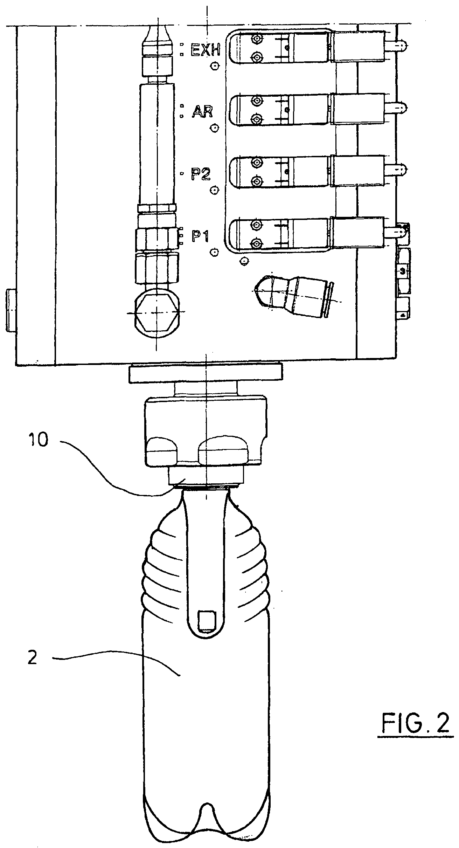

Fig. 2 zeigt schematisch den geblasenen Behälter (2) und den Vorformling (1) jeweils mit seiner Mündung (6) aufgenommen in der Blasdüsendichtung (10).

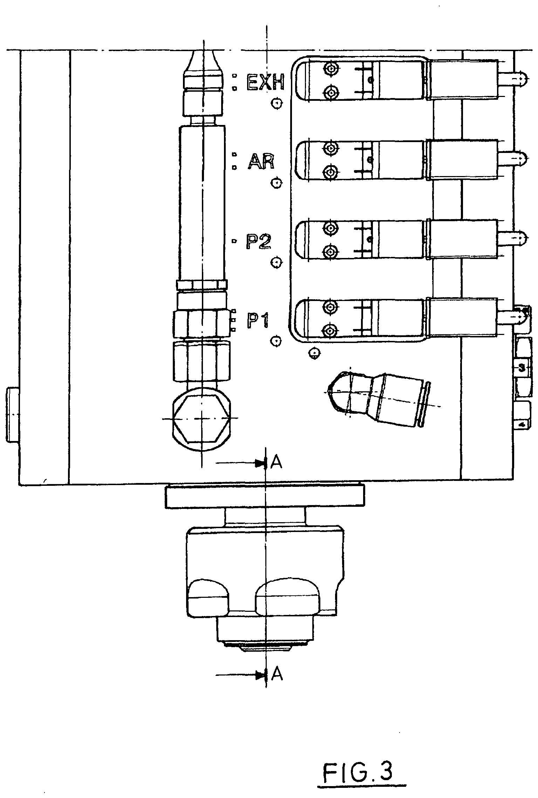

Fig. 3 zeigt die Skizze gemäß der Situation von Fig. 1 ohne Vorformling und mit dem axialen Schnittverlauf A-A

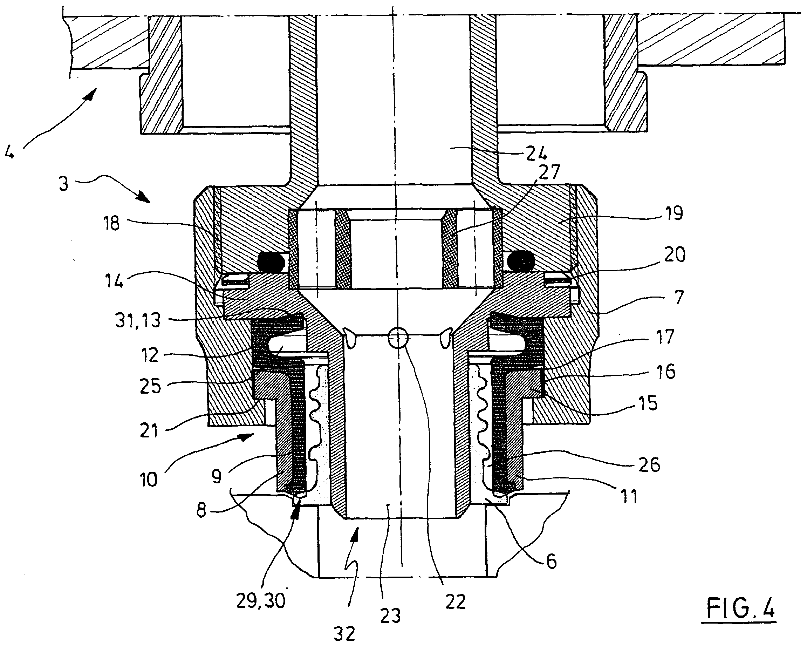

Fig. 4 zeigt den Axialschnitt A-A durch die Vorrichtung (3) mit Blasdüse (5) gemäß Fig. 3 mit schematisch dargestellter Mündung (6) des Vorformlings (1) bzw. des Behälters (2). Bei dem dargestellten Ausführungsbeispiel ist das Außenelement (7) als Überwurfmutter dargestellt, aufweisend eine für die Stützhülse (8) vorgesehene in axialer Richtung verlaufende radiale Anlageschulter (9) in Form eines Vorsprunges. Die Stützhülse (8) bildet zusammen mit dem Dichtelement (9) die Blasdüsendichtung (10).

Dargestellt ist ein bevorzugtes Ausführungsbeispiel, bei dem die Blasdüsendichtung (10) eine einbaufertige Einheit ist. Dies wird erreicht durch die konstruktive Ausgestaltung der Stützhülse (8) und des Dichtelementes (9) dadurch, dass ein Schnapphaken (11) das Dichtelement (9) an der Stützhülse (8) festlegt, nachdem beide ineinander geschoben sind.

Das Dichtelement (9) weist wenigstens eine vorzugsweise endseitige Wölbung (12) mit einer Dichtlippe (13) auf, welche stirnseitig an einer Anlagefläche (31) am Blasdüseneinsatz (14) anliegt und dichtet. Das Dichtelement (9) verfügt über eine vorzugsweise konzentrische, stirnseitig platzierte Dichtfläche (29), geeignet zur Anlage an den Stützring (30) der Mündung (6) des Vorformlings (1) bzw. Behälters (2).

Die Stützhülse (8) kann mit einem endseitigen Bund (15) ausgestattet sein und wird durch eine Spielpassung (16) in dem Außenelement (7) geführt, sodass der Hohlraum (17) zwischen der Wölbung (12) und dem Außenelement (7) während einer Verformung der Wölbung insbesondere zum Umgebungsraum hin entlüftet ist.

Die Spielpassung (16) ist derart dimensioniert, das eine Extrusion des Dichtelementes (9) bei Aufbringen des Blasdruckes verhindert wird. Der Bund (15) der Stützhülse (8) und die Führung am Außenelement (21) sind derart gestaltet, dass eine gemeinsame Anlagefläche die axiale Erstreckung der Blasdüsendichtung (10) begrenzt. Dargestellt ist die Situation unter Blasdruckbeaufschlagung, sodass die Flächen einander anliegen. Ohne Blasdruck kann ein Spaltmaß vorliegen.

Die Wölbung (12) ist geometrisch derart ausgebildet, dass bei Druckbeaufschlagung des Raumes (25) eine Verformung durch Aufweitung erfolgt, die eine Erstreckung des Dichtelementes (9) axial in Richtung der Einführöffnung (32) bewirkt und dadurch Andrückkräfte auf die Dichtflächenanlage (29, 30) realisiert.

Die Wölbung (12) des Dichtelementes (9) ist weiterhin derart ausgebildet, dass sie bei axialer Kraftwirkung auf die Dichtfläche (29) einfederbar ist und dadurch Längentoleranzen der angrenzenden Bauteile automatisch ausgleichen kann. Eine Ringwellfeder (20) ist vorgesehen, um die Sicherung des Gewindes (18) zwischen Außenelement (7) und Blasdüsenstange (19) durch Axialvorspannung zu realisieren.

Der Blasdüseneinsatz (14) ist mit wenigstens einer Durchgangsbohrung (22) ausgestattet und verbindet den Innenraum (23) des Blasdüseneinsatzes (14) mit dem Raum (25) innerhalb der Wölbung (12). Infolge der Verbindung der Blasdruckzuführung (24) mit dem Raum (23) des Blasdüseneinsatzes (14) wird der Raum (25, 26) über die wenigstens eine Durchgangsbohrung (22) mit Blasdruck beaufschlagt. Die Blasdüsenstange (19) verfügt über eine Führung (27) für die im Raum der Blasdruckzuführung (24) angeordnete Reckstange (28) (nicht dargestellt in Fig. 4).

## Patentansprüche

1. Vorrichtung (3) zur Blasformung von Behältern, aufweisend einen Blasdüsenkopf (7, 14) sowie eine Blasdüsendichtung (10) mit einer stirnseitigen Dichtfläche (29) und einer Wölbung (12), wobei die Blasdüsendichtung und der Blasdüsenkopf derart ausgebildet sind, dass durch Anlegen der Dichtfläche (29) an den Stützring (30) der Mündung (6) des Vorformlings (1) bzw. Behälters (2) ein druckbeaufschlagbarer Raum (25, 26) gebildet ist, **dadurch gekennzeichnet, dass** die Blasdüsendichtung (10) durch ein hülsenförmiges Dichtelement (9) gebildet ist, das von einer innerhalb der Blasdüse (5) beweglichen Stützhülse (8) wenigstens bereichsweise umfasst ist.

2. Vorrichtung (3) zur Blasformung von Behältern nach Anspruch 1, **dadurch gekennzeichnet, dass** das Dichtelement (9) einen Schnapphaken (11) aufweist, der mit der Stützhülse (8) derart zusammenwirkt, dass das Dichtelement (9) innerhalb der Stützhülse (9) festlegbar ist.

3. Vorrichtung (3) zur Blasformung von Behältern nach Anspruch 1, **dadurch gekennzeichnet, dass** das Dichtelement (9) eine Wölbung (12) aufweist, die geometrisch derart ausgebildet ist, dass ein zum Blasdüseneinsatz (14) hin geöffneter Raum (25) umschlossen ist.

4. Vorrichtung (3) zur Blasformung von Behältern nach Anspruch 1, **dadurch gekennzeichnet, dass** das Dichtelement (9) eine Wölbung (12) aufweist, die geometrisch derart ausgebildet ist, dass die Wölbung (12) endseitig des Dichtelementes (9) angeordnet ist und eine Dichtlippe (13) aufweist, welche stirnseitig an einer Anlagefläche (31) am Blasdüseneinsatz (14) anlegbar ist.

5. Vorrichtung (3) zur Blasformung von Behältern nach Anspruch 1, **dadurch gekennzeichnet, dass** das Dichtelement (9) eine Wölbung (12) aufweist, die geometrisch derart ausgebildet ist, dass bei Druckbeaufschlagung des Raumes (25) eine Verformung erfolgt, die eine Erstreckung des Dichtelementes (9) axial in Richtung der Einführöffnung (32) bewirkt und dadurch Andrückkräfte auf die Dichtflächenanlage (29, 30) realisiert.

6. Vorrichtung (3) zur Blasformung von Behältern nach Anspruch 1, **dadurch gekennzeichnet, dass** das Dichtelement (9) eine Wölbung (12) aufweist, die geometrisch derart ausgebildet ist, dass bei axialer Kraftwirkung auf die Dichtfläche (29) das Dichtelement (9) in Richtung der Anlagefläche (31) des Blasdüseneinsatzes (14) einfederbar ist.

7. Vorrichtung (3) zur Blasformung von Behältern nach Anspruch 1, **dadurch gekennzeichnet, dass** die Stützhülse (8) einen Bund (15) aufweist.

8. Vorrichtung (3) zur Blasformung von Behältern nach Anspruch 7, **dadurch gekennzeichnet, dass** der Bund (15) mittels einer Spielpassung (16) in dem Außenelement (7) bewegbar geführt ist und der Hohlraum (17) zwischen der Wölbung (12) und Außenelement (7) über die Spielpassung (16) zum Umgebungsraum hin entlüftet ist.

9. Vorrichtung (3) zur Blasformung von Behältern nach Anspruch 8 **dadurch gekennzeichnet, dass** die Spielpassung (16) derart dimensioniert ist, das eine Extrusion des Dichtelementes (9) in die Spielpassung (16) hinein bei Blasdruckbeaufschlagung verhindert wird.

10. Vorrichtung (3) zur Blasformung von Behältern nach Anspruch 1, **dadurch gekennzeichnet, dass** der Blasdüsenkopf im Wesentlichen gebildet ist durch ein Außenelement (7) und einen Blasdüseneinsatz (14).

11. Vorrichtung (3) zur Blasformung von Behältern nach Anspruch 10, **dadurch gekennzeichnet, dass** der Blasdüseneinsatz (14) wenigstens eine Durchgangsbohrung (22) zur Verbindung der Blasdruckzuführung (23, 24) des Blasdüseneinsatzes (14) mit dem Raum (25, 26) aufweist.

12. Vorrichtung (3) zur Blasformung von Behältern nach Anspruch 11, **dadurch gekennzeichnet, dass** der innerhalb des Raumes (23, 24, 25, 26) beaufschlagbare Druck bis zu 40 bar beträgt.

13. Vorrichtung (3) zur Blasformung von Behältern nach Anspruch 1, **dadurch gekennzeichnet, dass** die Stützhülse (8) durch einen Metall- oder Kunststoffwerkstoff ausgebildet ist.

14. Vorrichtung (3) zur Blasformung von Behältern nach Anspruch 1, **dadurch gekennzeichnet, dass** das Dichtelement (9) aus einem Elastomerwerkstoff ausgebildet ist.

15. Blasluftsteuerblock (4) in einer Blasstation, aufweisend wenigstens eine Vorrichtung (3) zur Blasformung von Behältern nach einem der vorgehenden Ansprüche.

## Claims

1. Device (3) for blow moulding containers, comprising a blowing nozzle head (7, 14) and a blowing nozzle seal (10) with a sealing surface (29) at the front end and a concavity (12), wherein the blowing nozzle seal and the blowing nozzle head are configured such that a space (25, 26), in which pressure can be built up, is formed by contact of the sealing surface (29) against the support ring (30) of the mouth (6) of the preform (1) or container (2),
**characterised in that**
- the blowing nozzle seal (10) is formed by a sleeve-shaped sealing element (9), which is surrounded at least in regions by a support sleeve (8), which is movable inside the blowing nozzle (5).

2. Device (3) for blow moulding containers according to claim 1, **characterised in that** the sealing element (9) comprises a snap-in hook (11) that cooperates with the support sleeve (8) such that the sealing element (9) can be fixed inside the support sleeve (8).

3. Device (3) for blow moulding containers according to claim 1, **characterised in that** the sealing element (9) comprises a concavity (12) that is configured geometrically such that a space (25), which is open to the blowing nozzle insert (14), is surrounded.

4. Device (3) for blow moulding containers according to claim 1, **characterised in that** the sealing element (9) comprises a concavity (12) that is configured geometrically such that the concavity (12) is arranged at an end of the sealing element (9) and comprises a sealing lip (13) that has a front surface which can rest against a contact surface (31) on the blowing nozzle insert (14).

5. Device (3) for blow moulding containers according to claim 1, **characterised in that** the sealing element (9) comprises a concavity (12) that is configured geometrically such that when the space (25) is pressurised, a deformation occurs, which brings about a stretching of the sealing element (9) axially toward the insertion opening (32) and as a result realizes pressing forces at a contact between the sealing surfaces (29, 30).

6. Device (3) for blow moulding containers according to claim 1, **characterised in that** the sealing element (9) comprises a concavity (12) that is configured geometrically such that, when an axial force acts on the sealing surface (29), the sealing element (9) can deflect toward the contact surface (31) of the blowing nozzle insert (14).

7. Device (3) for blow moulding containers according to claim 1, **characterised in that** the support sleeve (8) comprises a collar (15).

8. Device (3) for blow moulding containers according to claim 7, **characterised in that** the collar (15) is guided movably in the external element (7) by a loose fit (16) and the cavity (17) between the concavity (12) and the external element (7) is vented to the surrounding space through the loose fit (16).

9. Device (3) for blow moulding containers according to claim 8, **characterised in that** the loose fit (16) is dimensioned such that an extrusion of the sealing element (9) into the loose fit (16) during blowing pressurisation is prevented.

10. Device (3) for blow moulding containers according to claim 1, **characterised in that** the blowing nozzle head substantially comprises an external element (7) and a blowing nozzle insert (14).

11. Device (3) for blow moulding containers according to claim 10, **characterised in that** the blowing nozzle insert (14) comprises at least one through-bore (22) for connecting the blowing pressure feed (23, 24) of the blowing nozzle insert (14) to the space (25, 26).

12. Device (3) for blow moulding containers according to claim 11, **characterised in that** the pressure, which can be built up inside the space (23, 24, 25, 26), is up to 40 bar.

13. Device (3) for blow moulding containers according to claim 1, **characterised in that** the support sleeve (8) is made of a metal or plastic material.

14. Device (3) for blow moulding containers according to claim 1, **characterised in that** the sealing element (9) is made of an elastomeric material.

15. Blowing air control block (4) in a blowing station, comprising at least one device (3) for blow moulding containers according to any preceding claim.

## Revendications

1. Dispositif (3) de moulage par soufflage de récipients présentant une tête de buse de soufflage (7, 14) ainsi qu'un joint de buse de soufflage (10) avec une surface d'étanchéification (29) frontale et une courbure (12), le joint de buse de soufflage et la tête de buse de soufflage étant conformés de façon telle que l'application de la surface d'étanchéification (29) contre la collerette d'appui (30) de l'embouchure (6) de la préforme (1) ou du récipient (2) forme un espace (25, 26) pouvant être mis sous pression, **caractérisé en ce que** le joint de buse de soufflage (10) est formé par un élément d'étanchéification (9) en forme de douille partiellement au moins entouré d'une douille de maintien (8) pouvant se déplacer à l'intérieur de la buse de soufflage (5).

2. Dispositif (3) de moulage par soufflage de récipients selon la revendication 1, **caractérisé en ce que** l'élément d'étanchéification (9) présente un crochet d'encliquetage (11) dont l'action en concours avec la douille de maintien (8) permet de fixer l'élément d'étanchéification (9) à l'intérieur de la douille de maintien (9).

3. Dispositif (3) de moulage par soufflage de récipients selon la revendication 1, **caractérisé en ce que** l'élément d'étanchéification (9) présente une courbure (12) dont la conformation géométrique est telle qu'elle confine un espace (25) ouvert vers l'insert (14) de la buse de soufflage.

4. Dispositif (3) de moulage par soufflage de récipients selon la revendication 1, **caractérisé en ce que** l'élément d'étanchéification (9) présente une courbure (12) dont la conformation géométrique est telle que la courbure (12) est agencée à l'extrémité de l'élément d'étanchéification (9) et qu'elle présente une lèvre d'étanchéité (13) pouvant, du côté frontal, être appliquée contre une surface de contact (31) de l'insert (14) de la buse de soufflage.

5. Dispositif (3) de moulage par soufflage de récipients selon la revendication 1, **caractérisé en ce que** l'élément d'étanchéification (9) présente une courbure (12) dont la conformation géométrique est telle que la mise sous pression de l'espace (25) provoque une déformation qui entraîne une extension axiale de l'élément d'étanchéification (9) en direction de l'ouverture d'introduction (32) et produit ainsi des forces de pression s'exerçant sur la surface d'étanchéification (29, 30).

6. Dispositif (3) de moulage par soufflage de récipients selon la revendication 1, **caractérisé en ce que** l'élément d'étanchéification (9) présente une courbure (12) dont la conformation géométrique est telle que, en cas d'exercice de forces axiales sur la surface d'étanchéification (29), l'élément d'étanchéification (9) peut être comprimé en direction de la surface de contact (31) de l'insert (14) de la buse de soufflage.

7. Dispositif (3) de moulage par soufflage de récipients selon la revendication 1, **caractérisé en ce que** la douille de maintien (8) présente un épaulement (15).

8. Dispositif (3) de moulage par soufflage de récipients selon la revendication 7, **caractérisé en ce que** l'épaulement (15) est, au moyen d'un ajustement avec jeu (16), guidé dans l'élément extérieur (7) de façon à pouvoir se déplacer dans celui-ci et que la cavité (17) entre la courbure (12) et l'élément extérieur (7) est purgée vers l'espace extérieur par le jeu de l'ajustement (16).

9. Dispositif (3) de moulage par soufflage de récipients selon la revendication 8, **caractérisé en ce que** l'ajustement avec jeu (16) est dimensionné de façon à empêcher une extrusion de l'élément d'étanchéification (9) dans le jeu de l'ajustement (16) en cas de mise sous pression.

10. Dispositif (3) de moulage par soufflage de récipients selon la revendication 1, **caractérisé en ce que** la tête de buse de soufflage est essentiellement formée par un élément extérieur (7) et un insert (14) de la buse de soufflage.

11. Dispositif (3) de moulage par soufflage de récipients selon la revendication 10, **caractérisé en ce que** l'insert (14) de la buse de soufflage présente au moins un alésage traversant (22) pour assurer une jonction entre le conduit d'adduction de gaz de soufflage (23, 24) de l'insert (14) de la buse de soufflage et l'espace (25, 26).

12. Dispositif (3) de moulage par soufflage de récipients selon la revendication 11, **caractérisé en ce que** la pression appliquée à l'intérieur de l'espace (23, 24, 25, 26) peut atteindre 40 bar.

13. Dispositif (3) de moulage par soufflage de récipients selon la revendication 1, **caractérisé en ce que** la douille de maintien (8) est constituée d'un matériau métallique ou matière plastique.

14. Dispositif (3) de moulage par soufflage de récipients selon la revendication 1, **caractérisé en ce que** l'élément d'étanchéification (9) est constitué d'un matériau élastomère.

15. Bloc de commande (4) d'adduction d'air de soufflage dans une station de soufflage présentant au moins un dispositif (3) de moulage par soufflage de récipients selon l'une des revendications précédentes.
